## Europäisches Patentamt
## European Patent Office
## Office européen des brevets

(19)

(11) Veröffentlichungsnummer: **0 324 758 B1**

(12) **EUROPÄISCHE PATENTSCHRIFT**

(45) Veröffentlichungstag der Patentschrift: **18.07.90**

(51) Int. Cl.⁵: **F 16 H 61/06**

(21) Anmeldenummer: **87906178.6**

(22) Anmeldetag: **07.09.87**

(86) Internationale Anmeldenummer:
**PCT/EP87/00505**

(87) Internationale Veröffentlichungsnummer:
**WO 88/02078 24.03.88 Gazette 88/07**

(54) **ELEKTRO-HYDRAULISCHE STEUERUNG FÜR EIN AUTOMATISCH ZU SCHALTENDES KRAFTFAHRZEUGGETRIEBE.**

(30) Priorität: **09.09.86 PCt/ep86/00517**

(43) Veröffentlichungstag der Anmeldung:
**26.07.89 Patentblatt 89/30**

(45) Bekanntmachung des Hinweises auf die Patenterteilung:
**18.07.90 Patentblatt 90/29**

(84) Benannte Vertragsstaaten:
**DE FR GB IT NL SE**

(56) Entgegenhaltungen:
**DE-A-2 264 944**
**DE-B-2 659 353**
**US-A-3 559 669**

**Automobiltechnische Zeitschrift, volume 85, NO. 6, June 1983, K. Lorenz et al.: "Einsatz des Viergang-Automatikgetriebes 4 HP22 mit elektronisch-hydraulischer Steuerung", pages 401-405**

(73) Patentinhaber: **ZAHNRADFABRIK FRIEDRICHSHAFEN AKTIENGESELLSCHAFT Löwentaler Strasse 100 Postfach 2520 D-7990 Friedrichshafen 1 (DE)**

(72) Erfinder: **GIERER, Georg Zehntscheuerstr. 44 D-7993 Kressbronn (DE)**

(74) Vertreter: **Raue, Reimund Zahnradfabrik Friedrichshafen AG Löwentaler Strasse 100 Postfach 2520 D-7990 Friedrichshafen 1 (DE)**

EP 0 324 758 B1

## Beschreibung

Diese Erfindung betrifft eine elektro-hydraulische Steuerung für ein automatisch zu schaltendes Kraftfahrzeuggetriebe nach dem Oberbegriff von Anspruch 1.

Aus ATZ 85 (1983) 6 Seiten 393 bis 405 ist aus zwei Veröffentlichungen ein Vier-Gang-Automatgetriebe mit elektronisch-hydraulischer Steuerung bekannt. Aus Bild 6 Seite 403 ist bekannt, daß z.B. der zweite Gang über zwei Magnetventile (MV 1, MV 2) und zwei Schaltventile 1—2, 2—3 sowie zwei Kupplungsventile C, C' und den dazu gehörenden Kupplungen C und C' geschaltet wird.

Aus der Druckschrift 4 HP 22 E der ZF Getriebe GmbH, Saarbrücken, Ölführungspläne, ist diese elektronischhydraulische Steuerung ausführlicher dargestellt und ergänzt das Bild 6. So sind die Schalt- und Kupplungsventile und deren Anschlußleitungen sowie noch die Dämpfer für die Kupplungen C und C' erkennbar.

Da insbesondere bei einer Schaltung vom ersten in den zweiten Gang normalerweise die größte Drehzahldifferenz zu überwinden ist und die Auslegung der Kupplung für diese mögliche Differenz und Vollast erfolgen muß, ergeben sich bei Null- und Teillast häufig harte Schaltungen.

Es ist deshalb Aufgabe der Erfindung, eine elektrohydraulische Steuerung nach dem Oberbegriff von Anspruch 1 so zu verbessern, daß bei Schaltungen mit großer Drehzahldifferenz in Teil- oder Nullast keine harten Schaltungen entstehen und die Realisierung dieser Aufgabe mit möglichst wenig Aufwand erfolgt.

Diese Aufgabe wird mit den kennzeichnenden Merkmalen von Anspruch 1 erfüllt.

Während nach dem Stand der Technik beide Kupplungen über den gesamten Lastbereich synchron zugeschaltet werden, ist es mit einfachen Mitteln möglich, eine der Kupplungen verzögert zu schließen, so daß sich eine weichere Lastübernahme und damit eine weichere Schaltung ergibt.

Mit den Ansprüchen 2 bis 4 wird die Erfindung in vorteilhafter Weise weiter ausgestaltet. Da in einem Automatgetriebe neben einer guten Schaltqualität auch die Zeit, in der eine Schaltung durchgeführt wird, und der Verschleiß der Kupplung in der Reibphase von großer Bedeutung ist, ist die synchrone bzw. asynchrone Ansteuerung der Kupplung in Abhängigkeit vom Lastbereich besonders vorteilhaft, weil nur bei Teil- oder Nullast die asynchrone Ansteuerung—also dann, wenn es für eine qualitative Schaltung nötig ist—erfolgt.

Aus der DE—B—26 59 353 ist eine hydraulische Steuereinrichtung bekannt, in der beim Hochschalten zum Schalten eines Ganges mit großer Drehzahldifferenz (z.B. Gang 1 in Gang 2) die Auslegung der Kupplung für die Vollast erfolgt und unabhängig von der tatsächlichen Last während der Hochschaltung und des zeitlich verzögerten Druckaufbaues, zwei Kupplungen (Bremsen C, C') symmetrisch mit Druckmittel gefüllt werden. Erst nach der Beendigung der Rutschphase wird vom Kupplungsdruck der ersten Kupplung (Bremse C) das Kupplungsschaltventil der zweiten Kupplung (Bremse C') umgeschaltet, so daß nunmehr über eine gedrosselte Zuleitung der Druckanstieg dieser zweiten Kupplung C' gegenüber der ersten Kupplung langsamer erfolgt. Dieser nunmehr unterschiedliche Druckanstieg auf den vollen Wert hat aber keinen Einfluß auf die Qualität des Schaltübergangs bei einer Hochschaltung 1—2. Die gedrosselte Leitung am Kupplungsschaltventil ist nur angeordnet, damit bei einer Rückschaltung von Gang 3 nach Gang 2 die durch die Befüllung der Kupplung (Bremse C') bewirkt wird, diese stoßfrei erfolgen kann.

Mit dieser Einrichtung können bei geringer anliegender Last oder bei einer geringen Drehzahldifferenz harte Hochschaltungen nicht verhindert werden.

Weitere Einzelheiten der Erfindung werden anhand von Zeichnungen und einem Ausführungsbeispiel erläutert. Es zeigen

Fig. 1 ein Vier-Gang-Automatgetriebe in schematischer Darstellung;

Fig. 2 eine Tabelle über die eingeschalteten Kupplungen, Bremsen und Magnetventile in den einzelnen Gängen;

Fig. 3 ein vereinfacht dargestelltes Steuer- und Ölführungsschema im Bereich der Schaltkupplungen für den zweiten Gang;

Fig. 4 Darstellung der synchronen Kupplungszuschaltung in einem Druck-Zeitschaubild;

Fig. 5 Darstellung der asynchronen Kupplungszuschaltung in einem Druck-Zeitschaubild.

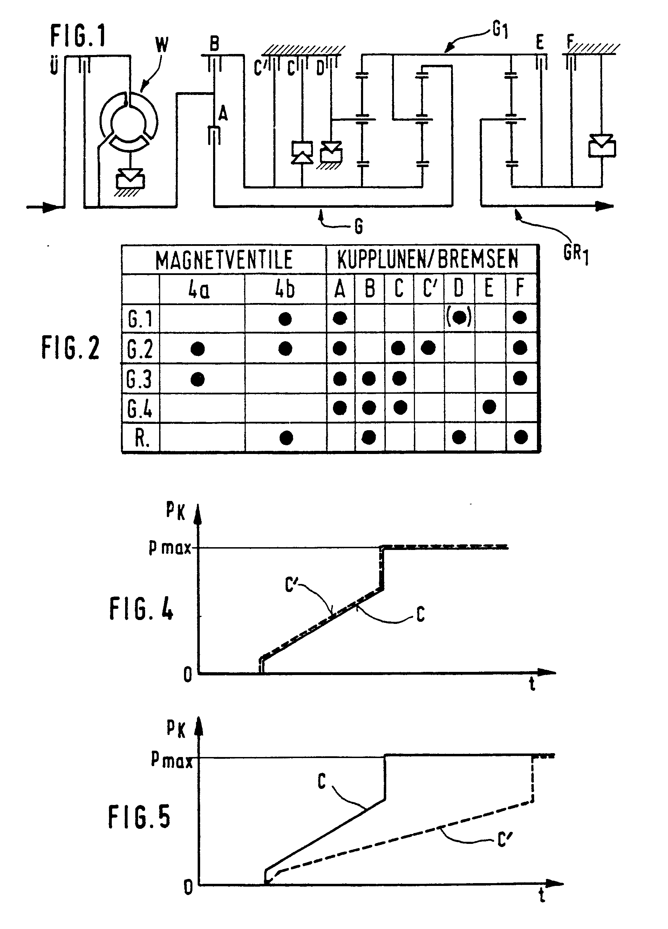

Das Automatgetriebe G 1 nach Fig. 1 wird von einem nicht dargestellten Antriebsmotor über einen hydrodynamischen Drehmomentwandler W mit Überbrückungskupplung ÜK angetrieben und besteht aus einem Grundgetriebe G mit den Kupplungen A und B sowie den Kupplungen (Bremsen) C', C und D sowie einem Gruppengetriebe GR 1 für den vierten Gang mit der Kupplung E und der Kupplung (Bremse) F. Weiter sind zur Verbesserung der Schaltung und Steuerung noch nicht bezeichnete Freiläufe sowohl im Grund- wie Gruppengetriebe eingeordnet.

Aus der Tabelle nach Fig. 2 ist leicht ableitbar, welche Kupplungen A bis F und Magnetventile 4a, 4b in den einzelnen Gängen geschlossen sind und von der elektronisch-hydraulischen Steuerung und im Falle der Magnetventile von dem elektronischen Steuergerät ein- und ausgeschaltet und in bezug auf die Kupplungen mit Systemdruck beaufschlagt werden.

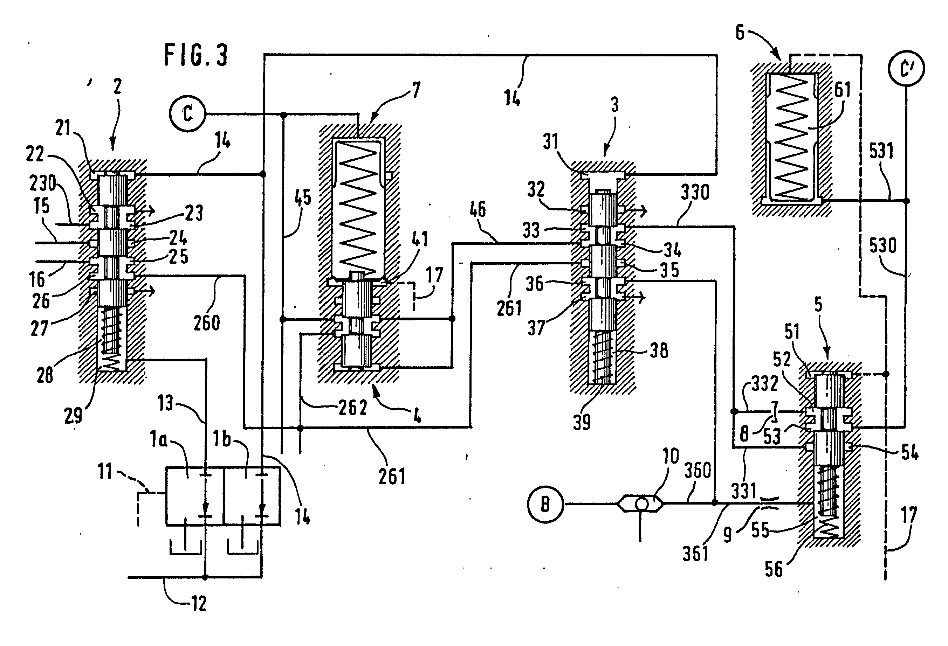

In Fig. 3 ist eine elektro-hydraulische Steuerung eines Vier-Gang-Automatgetriebes vereinfacht und als Ausschnitt mit den Magnetventilen 1a, 1b, 1-2-Schaltventil 2, 2-3-Schaltventil 3, Kupplungsventil 4 für die Kupplung C und 5 für die Kupplung C' sowie den Dämpfern 6 und 7 mit den gegenseitigen Verknüpfungen über Steuerdruck und Systemdruckleitungen dargestellt. Die Magnetventile 1a, 1b erhalten die Schaltbefehle über die elektrische Leitung 11 von einem nicht dargestellten elektronischen Steuergerät. Das Druckmittel wird von einem nicht dargestellten Druckreduzierventil über die Druckleitung 12 zugeführt. Vom Magnetventil 1a führt eine Steuerdruckleitung 13 zum Federraum 28 des 1-2-Schaltventiles 2, während die Steuerdruckleitung 14 das Magnetventil 1b mit den stirnseitig angeordneten Ringräumen 21, 31 der Schaltventile 2, 3 verbindet. Über die Leitungen 15, 16 wird dem 1-2-Schaltventil 2 in Abhängigkeit von der Wählschieberstellung—Wählschieber nicht dargestellt—Systemdruck in den vierten und fünften Ringraum 24, 25 zugeführt. Aus dem dritten Ringraum 23 führt eine Leitung 230 zur nicht dargestellten Rückwärtsgang-Kupplung D. Das 1-2-Schaltventil 2 wird über die Feder 29 in der gezeichneten Stellung gehalten und der zweite 22 und siebente Ringraum 27 ist entlüftet. Dem 2-3-Schaltventil 3 wird Systemdruck über die Leitung 46 im vierten Ringraum 34 und über Leitung 261 im fünften Ringraum 35 zugeführt. Der dritte Ringraum 33 ist über die Leitung 330, 332 und eine Blende 8 mit dem zweiten Ringraum 52 des Kupplungsventils 5 und der sechste Ringraum 36 über die Leitung 360 und ein Kugelventil 10 mit der Kupplung B verbunden. Der zweite und siebente Ringraum ist entlüftet. Das Kupplungsventil 4 ist in bekannter Weise in unmittelbarer Verbindung mit dem Dämpfer 7 und wirkt in Abhängigkeit vom Motordrehmoment und von der Gaspedalstellung. Der Dämpfer 7 mit Kupplungsventil 4 ist während des Schaltvorganges mit Modulationsdruck beaufschlagt, so daß das Kupplungsventil als variables Druckreduzierventil arbeitet, es steuert den Kupplungsdruck während des Schaltvorganges (Fig. 4, 5). Die Dämpfer 6 der Kupplung C' ist über die Leitung 531 mit der Leitung 530, die vom dritten Ringraum 53 des Kupplungsventiles 5 zur Kupplung C' führt, verbunden. In den Dämpferraum 61 führt noch eine Modulationsdruckleitung 17, die gleichzeitig auch zum ersten Ringraum 51 des Kupplungsventiles 5 und zum Ringraum 41 führt, der zwischen dem Kupplungsventil 4 und dem Dämpfer 7 angeordnet ist.

Die elektro-hydraulische Steuerung wirkt wie folgt: Für den zweiten Gang werden beide Magnetventile 1a, 1b geschaltet. Die Druckleitung 12 fördert über das Magnetventil 1a Steuerdruck in den Federraum 28 des 1-2-Schaltventiles 2, und über das Magnetventil 1b werden gleichfalls die ersten stirnseitigen Ringräume 21, 31 der Schaltventile 2, 3 beaufschlagt. Das 1-2-Schaltventil 2 ist wegen der Befüllung des Federraumes 28 in der gezeichneten Stellung blockiert, so daß Systemdruck über die Leitung 16, 260, 262 zum Drucksteuerventil 4 gelangt und lastabhängig über die Leitung 45 zur Kupplung C geleitet wird. Bei synchroner Ansteuerung der beiden Kupplungen C und C' gelangt über die Leitung 46 gleichfalls lastabhängiger Systemdruck zum vierten Ringraum 34 des 2-3-Schaltventiles 3. Dieses befindet sich infolge des Steuerdruckes über die Leitung 14 in der gezeichneten Stellung, so daß über den dritten Ringraum 33 und Leitungen 330, 331 der vierte Ringraum 54 des Kupplungsventiles 5 befüllt wird. Dieses ist vom Modulationsdruck—Leitung 17—geschaltet, so daß über den dritten Ringraum 53 und die Leitung 530 die Kupplung C' beaufschlagt wird. Der Dämpfer 6 hat dabei keine Funktion.

Diese synchrone Schaltung der beiden Kupplungen C und C' nach Fig. 4 erfolgt im oberen Lastbereich mit einer relativ hohen Drehzahldifferenz.

Bei Nullast oder im unteren Lastbereich wird das Kupplungsventil 5 nicht geschaltet, so daß der lastabhängige Systemdruck von 2-3-Schaltventil 3 über die Leitung 330, 332 und die Blende 8 zum zweiten Ringraum 52 und vom dritten Ringraum 53 über die Leitung 530 zur Kupplung C' gelangt. Unter der Wirkung der Blende 8 in der Leitung 332 wird auch der Dämpfer 6 in der Leitung 530 wirksam. Der Druckanstieg in der Kupplung C' wird verzögert, dadurch entsteht eine Verschiebung des Druckanstieges zwischen den beiden Kupplungen C und C' (siehe Fig. 5) und eine Reduzierung der Übertragungsfähigkeit während der Schaltung. Die Einstellung bzw. Anpassung des Druckanstieges beider Kupplungen C, C' von synchroner Ansteuerung—Fig. 4—zur asynchronen Ansteuerung—Fig. 5—erfolgt über die Auslegung der Feder 56 im Kupplungsventil 5.

Um eine Überschneidung mit der Kupplung B des nächsten Ganges bei Rückschaltungen zu verhindern, wird der Druck dieser Kupplung B, Leitung 360, über Leitung 361 in den Federraum 55 vom Kupplungsventil 5 geleitet. Dadurch ist das Kupplungsventil 5 in der gezeichneten Stellung blockiert, die Blende 8 und der Dämpfer 6 sind somit voll wirksam. Um das Kupplungsventil 5 zu dämpfen, ist in der Leitung 361 eine Drosselstelle 9 angeordnet.

Bezugszeichen

| | |
|---|---|
| 1a | erstes Magnetventil |
| 1b | zweites Magnetventil |
| 11 | elektrische Leitung |
| 12 | Druckleitung |
| 13 | Steuerdruckleitung |
| 14 | Steuerdruckleitung |
| 15 | Systemdruckleitung |
| 16 | Systemdruckleitung |
| 17 | Modulationsdruckleitung |
| 2 | 1-2-Schaltventil |
| 21 | stirnseitiger Ringraum |
| 22—27 | Ringräume |
| 28 | Federraum |
| 29 | Feder |
| 230 | Leitung |
| 260—262 | Leitung |
| 3 | 2-3-Schaltventil |
| 31 | stirnseitiger Ringraum |
| 32—37 | Ringräume |
| 38 | Federraum |
| 39 | Feder |
| 330—332 | Leitung |
| 360 | Leitung |
| 361 | Leitung |
| 4 | Kupplungsventil C |
| 41 | Ringraum |
| 45 | Leitung |

| | |
|---|---|
| 46 | Leitung |
| 5 | Kupplungsventil C' |
| 51 | stirnseitiger Ringraum |
| 52—54 | Ringräume |
| 55 | Federraum |
| 56 | Feder |
| 530 | Leitung |
| 531 | Leitung |
| 6 | Dämpfer |
| 61 | Dämpferraum |
| 7 | Dämpfer (Kupplung C) |
| 8 | Blende |
| 9 | Drossel |
| 10 | Kugelventil |
| C | Kupplung (Bremse) |
| C' | Kupplung (Bremse) |
| B | Kupplung |

## Patentansprüche

1. Elektro-hydraulische Steuerung für ein automatisch zu schaltendes Kraftfahrzeuggetriebe (G1) mit mindestens zwei Magnetventilen (1a, 1b), die über Steuerdruckleitungen (13, 14) mit Schaltventilen (2, 3) und diese mit Kupplungsventilen (4, 5) und Dämpfern (6, 7) über Systemdruckleitungen (260, 261, 262) zum Schalten von Kupplungen verbunden sind und zur Erzielung eines Ganges zwei Kupplungen (Bremsen C, C') parallel zueinander zugeschaltet werden, und daß die eine Kupplung (Bremse C) über einen Freilauf wirkt, wobei die Kupplungsventile (4, 5) noch einen Anschluß für die Zuführung eines lastabhängigen Modulationsdruckes (Modulationsdruckleitung 17) aufweisen dadurch gekennzeichnet, daß der erste kopfseitige Ringraum (51) des Kupplungsventils C' (5) und der Dämpfraum (61) der Dämpfers (6) für die Kupplung C' mit der Modulationsdruckleitung (17) verbunden sind und daß in einer ersten von einem Modulationsdruck (Leitung 17) bewirkten Schaltstellung des Kupplungsventils C' (5) neben der Kupplung (Bremse C) auch die Kupplung (Bremse C') mit der Systemdruckleitung (260, 261, 262, 330, 331, 530) verbunden und der Dämpfer (6) über Modulationsdruck (Leiting 17) blockiert ist, während in einer zweiten Schaltstellung des Kupplungsventiles (5) in der der Modulationsdruck (Leitung 17) abgeschalt ist, unter der Wirkung einer Feder (56) die Kupplung (Bremse C') nur über eine Drossel (8) mit der Systemdruckleitung (330, 332) verbunden ist.

2. Elektro-hydraulische Steuerung nach Anspruch 1, dadurch gekennzeichnet, daß die synchrone Ansteuerung der beiden Kupplungen (Bremse C, C') nach der ersten Schaltstellung vom Kupplungsventil C' (5) im oberen Lastbereich bei einer hohen Drehzahldifferenz und die asynchrone Ansteuerung in der zweiten Schaltstellung vom Kupplungsventil C' (5) bei Nullast oder im unteren Lastbereich erfolgt.

3. Elektro-hydraulische Steuerung nach Anspruch 2, dadurch gekennzeichnet, daß die asynchrone Ansteuerung gemäß der zweiten Schaltstellung sich über den gesamten Lastbereich (P0—P max) erstreckt.

4. Elektro-hydraulische Steuerung nach Anspruch 3, dadurch gekennzeichnet, daß der lastabhängige Systemdruck über die Leitung (330) vom dritten Ringraum (33) des 2-3-Schaltventiles (3) einmal ungedrosselt über die Leitung (331) zum vierten Ringraum (54) und von einem dritten Ringraum (53) des geschalteten Kupplungsventils (5) zur Kupplung (C') und in einer zweiten Schaltstellung über die Leitung (332) und eine Blende (8) zum zweiten Ringraum (52) und vom dritten (53) des durch eine Feder (56) in einer Endstellung gehaltenen Kupplungsventils (5) über die Leitung (530) zur Kupplung (C') gedrosselt geleitet wird.

5. Elektro-hydraulische Steuerung nach Anspruch 4, dadurch gekennzeichnet, daß in der zweiten Schaltstellung des Kupplungsventils (5) über die Leitung (531) an die Leitung (530) zur Kupplung (Bremse C') angeschlossene Dämpfer (6) wirkt und zu einer verzögerten Zuschaltung beiträgt.

6. Elektro-hydraulische Steuerung nach Anspruch 1, dadurch gekennzeichnet, daß

—das erste Magnetventil (1a) über eine Steuerdruckleitung (13) mit dem Federraum (28) des 1-2-Schaltventiles (2) und das zweite Magnetventil (1b) über eine Steuerdruckleitung (14) mit den ersten stirnseitigen Ringräumen (21, 31) der 1-2 und 2-3 Steuerventile (2, 3) verbunden sind, dem 1-2 Schaltventil (2) über den vierten (24) und fünften Ringraum (25) und die Leitungen (15, 16) Systemdruck zugeführt wird und unter dem Druck der Feder (29) in einer nicht geschalteten Stellung über den sechsten Ringraum (26) und die Leitungen (260, 262) eine Druckmittelverbindung zum Kupplungsventil (4) und von dort mit einem lastabhängigen Druck über die Leitung (45) zur Kupplung (C) besteht;

—eine Leitung (46) zwischen dem Kupplungsventil (4) und dem vierten Ringraum (34) sowie dem sechsten Ringraum (36) des 2-3-Schaltventils sowie eine Leitung (360) zu einem Kugelventil (10) und weiter zur Kupplung (B) angeordnet ist;

—der dritte Ringraum (33) des 2-3-Schaltventiles (3) über die Leitungen (330, 331) mit dem vierten Ringraum (54) des Kupplungsventiles (5) und über die Leitungen (330, 332) und die Blende (8) mit dem zweiten Ringraum (52) verbunden ist;

—eine Leitung (530) vom dritten Ringraum (53) des Kupplungsventiles (5) zur Kupplung (C') führt, an die noch über eine Leitung (531) ein Dämpfer (6) angeschlossen ist

—und eine Modulationsdruckleitung (17) von einem nicht dargestellten Modulationsdruckventil zu einem zwischen dem Kupplungsventil (4) und Dämpfer (7) für die Kupplung (C) liegenden Ringraum (41) und gleichzeitig zu einem ersten stirnseitigen Ringraum (51) vom Kupplungsventil (5) und zu einem Federraum (61) des Dämpfers (6), der der Kupplung (C') zugeordnet ist, führt.

## Revendications

1. Commande électro-hydraulique pour une boîte de vitesses automatique (G1) d'un véhicule à moteur, comportant au moins deux électrovannes (1a, 1b) qui sont reliées à des soupapes de changement de rapport (2, 3) par des conduites de pression de commande (13, 14), lesdites soupapes étant reliées par des conduites de pression d'alimentation (260, 261, 262) à des soupapes d'embrayage (4, 5) et à des amortisseurs (6, 7) pour commander des embrayages, deux embrayages (freins, C, C') étant enclenchés en parallèle pour l'obtention d'un rapport, l'un des embrayages (frein C) agissant par l'intermédiaire d'un dispositif à roue libre, les soupapes d'embrayage (4, 5) comportant en outre un raccord pour l'entrée d'une pression de modulation dépendant de la charge (conduite de pression de modulation 17), caractérisée en ce que la première chambre annulaire frontale (51) de la soupape (5) de l'embrayage C' et la chambre d'amortissement (61) de l'amortisseur (6) correspondant à l'embrayage C' sont reliées à la conduite de pression de modulation (17), et en ce que dans une première position fonctionelle de la soupape (5) de l'embrayage C', produite par une pression de modulation (conduite 17), la conduite de pression d'alimentation (260, 261, 262, 330, 331, 530) est reliée à la fois à l'un (frein C) et à l'autre (frein C') des deux embrayages et l'amortisseur (6) est bloqué par la pression de modulation (conduite 17), tandis que dans une seconde position fonctionnelle de ladite soupape d'embrayage (5), position dans laquelle la pression de modulation (conduit 17) est coupée, l'embrayage (frein C') n'est relié à la conduite de pression d'alimentation (330, 332) qu'à travers un étranglement (8), grâce à l'action d'un ressort (56).

2. Commande électro-hydraulique selon la revendication 1, caractérisée en ce que la commande synchrone des deux embrayages (freins C, C') résultant de la première position de la soupape (5) de l'embrayage C' s'effectue dans le domaine supérieur de la charge, pour une forte différence de vitesses de rotation, et la commande asynchrone résultant de la seconde position de la soupape (5) de l'embrayage C' s'effectue à charge nulle ou dans le domaine inférieur de la charge.

3. Commande électro-hydraulique selon la revendication 2, caractérisée en ce que la commande asynchrone résultant de ladite seconde position s'étend sur tout le domaine de charge (P0—Pmax).

4. Commande électro-hydraulique selon la revendication 3, caractérisée en ce que la pression d'alimentation dépendant de la charge, délivrée dans la conduite (330) sortant de la troisième chambre annulaire (33) de la soupape de changement de rapport 2—3 (3), est transmise sans réduction dans une première position, par une conduite (331) à la quatrième chambre annulaire (54) de la soupape d'embrayage (5) enclenchée et de la troisième chambre annulaire (53) de cette soupape à l'embrayage (C'), et est transmise avec réduction dans une seconde position de la soupape d'embrayage (5) maintenue en fin de course par un ressort (56), à travers la conduite (332) et un réducteur (8) jusqu'à la deuxième chambre annulaire (52) de cette soupape et de ladite troisième chambre à l'embrayage (C') par la conduite (530).

5. Commande électro-hydraulique selon la revendication 4, caractérisée en ce qu'un amortisseur (6), raccordé par la conduite (531) à la conduite (530) allant à l'embrayage (frein C'), fonctionne dans la seconde position de la soupape d'embrayage (5) et contribue à retarder l'enclenchement.

6. Commande électro-hydraulique selon la revendication 1, caractérisée en ce que:

—la première électrovanne (1a) est reliée par une conduite de pression de commande (13) à la chambre à ressort (28) de la soupape de changement de rapport 1-2 (2) et la seconde électrovanne (1b) est reliée par une conduite de pression de commande (14) aus premières chambres annulaires frontales (21, 31) des soupapes de changement de rapport 1-2 et 2-3 (2, 3), la pression d'alimentation est amenée à la soupape de changement de rapport 1-2 (2) par les conduites (15, 16) dans sa quatrième (24) et sa cinquième chambre annulaire (25) et, sous l'effet de la poussée du ressort (29) dans une position non enclenchée, une liaison hydraulique est établie à travers la sixième chambre annulaire (26) et les conduites (260, 262) jusqu'à la soupape d'embrayage (4) et de là par la conduite (45) jusqu'à l'embrayage (C) avec une pression dépendant de la charge;

—il comporte une conduite (46) entre la soupape d'embrayage (4) et la quatrième chambre annulaire (34) de la soupape de changement de rapport 2-3, ainsi qu'une conduite (360) allant de la sixième chambre annulaire (36) de cette soupape à un clapet à bille (10) et ensuite à l'embrayage (B);

—la troisième chambre annulaire (33) de la soupape de changement de rapport 2-3 (3) est reliée par les conduites (330, 331) à la quatrième chambre annulaire (54) de la soupape d'embrayage (5), et à la seconde chambre annulaire (52) de celle-ci par les conduites (330, 332) et le réducteur (8);

—une conduite (530) mène de la troisième chambre annulaire (53) de la soupape d'embrayage (5) à l'embrayage (C') et est raccordée en outre à un amortisseur (6) par une conduite (531);

—et une conduite de pression de modulation (17) mène d'une soupape de pression de modulation (non représentée) à une chambre annulaire (41) disposée entre la soupape d'embrayage (4) et l'amortisseur (7) correspondant à l'embrayage (C), et en même temps à une première chambre annulaire frontale (51) de la soupape d'embrayage (5) et à une chambre à ressort (61) de l'amortisseur (6) correspondant à l'embrayage (C').

**Claims**

1. Electro-hydraulic control for an automatically changing motor vehicle gearbox (G1) with at least two magnetic valves (1a, 1b), which are connected via control pressure lines (13, 14) to switching valves (2, 3), which are connected to clutch valves (4, 5) and dampers (6, 7) via system pressure lines (260, 261, 262) for changing clutches, and to obtain a gear two clutches (brakes C, C') are connected in parallel to one another, and that one clutch (brake C) operates via a free-wheel, the clutch valves (4, 5) having an additional terminal for the supply of a load-dependent modulation pressure (modulation pressure line 17), characterised in that the first annular space (51) on the top of the clutch valve C' (5) and the damping chamber (61) of the damper (6) for the clutch C' are connected to the modulation pressure line (17) and in that in a first switching position of the clutch valve C' (5) effected by a modulation pressure (line 17), in addition to the clutch (brake C), the clutch (brake C') is also connected to the system pressure line (260, 261, 262, 330, 331, 530) and the damper (6) is blocked by modulation pressure (line 17), whereas in a second switching position of the clutch valve (5), in which the modulation pressure (line 17) is switched off, the clutch (brake C') is connected to the system pressure line (330, 332) only via a choke (8) under the effect of a spring (56).

2. Electro-hydraulic control device according to claim 1, characterised in that synchronous driving of the two clutches (brake C, C') is obtained in the first switching position of the clutch valve C' (5) in the upper load range at a high running speed differential and asynchronous driving is obtained in the second switching position of the clutch valve C' (5) at zero load or in the lower load range.

3. Electro-hydraulic control device according to claim 2, characterised in that asynchronous driving in the second switching position extends over the whole load range ($P_0$—$P_{max}$).

4. Electro-hydraulic control device according to claim 3, characterised in that the load-dependent system pressure is conducted via the line (330) from the third annular space (33) of the 2-3-switching valve (3) once unchoked via the line (331) to the fourth annular chamber (54), and is conducted choked via the line (331) to the fourth annular chamber (54) and from a third annular chamber (53) of the switched clutch valve (5) to the clutch (C') and in a second switching position via the line (332) and a diaphragm (8) to the second annular chamber (52) and from the third [annular chamber] (53) of the clutch valve (5) held in a final position by a spring (56) via the line (530) to the clutch (C').

5. Electro-hydraulic control device according to claim 4, characterised in that in the second switching position of the clutch valve (5) [a] damper (6) connected via the line (531) to the line (530) to the clutch (brake C') operates and helps to delay switching.

6. Electro-hydraulic control device according to claim 1, characterised in that the first magnetic valve (1a) is connected to the spring chamber (28) of the 1-2-switching valve (2) via a control pressure line (13) and the second magnetic valve (1b) is connected to the first end-face annular chambers (21, 31) of the 1—2 and 2—3 control valves (2, 3) via a control pressure line (14), system pressure is supplied to the 1—2 switching valve (2) via the fourth (24) and fifth (25) annular chambers and the lines (15, 16), and under the pressure of the spring (29) in a non-switched position via the sixth annular chamber (26) and the lines (260, 262) a pressure medium connection exists with the clutch valve (4), and thence with a load-dependent pressure via the line (45) to the clutch (C);

—a line (46) is disposed between the clutch valve (4) and the fourth annular chamber (34) and the sixth annular chamber (36) of the 2-3-switching valve, and a line (360) to a ball valve (10) and further to the clutch (B) is provided;

—the third annular chamber (33) of the 2-3-switching valve (3) is connected to the fourth annular chamber (54) of the clutch valve (5) via the lines (330, 331) and is connected to the second annular chamber (52) via the lines (330, 332) and the diaphragm (8);

—a line (530) leads from the third annular chamber (53) of the clutch valve (5) to the clutch (C'), to which a damper (6) is connected, again via a line (531);

—a modulation pressure line (17) leads from a modulation pressure valve, not shown, to an annular chamber (41) lying between the clutch valve (4) and the damper (7) for the clutch (C) and simultaneously to a first end-face annular chamber (51) of the clutch valve (5) and to a spring chamber (61) of the damper (6), with which the clutch (C') is associated.

FIG.1

FIG.2

| | MAGNETVENTILE | | KUPPLUNEN/BREMSEN | | | | | | |
|---|---|---|---|---|---|---|---|---|---|
| | 4a | 4b | A | B | C | C' | D | E | F |
| G.1 | | ● | ● | | | | (●) | | ● |
| G.2 | ● | ● | ● | | ● | ● | | | ● |
| G.3 | ● | | ● | ● | ● | | | | ● |
| G.4 | | | ● | ● | ● | | | ● | |
| R. | | ● | | ● | | | ● | | ● |

FIG. 4

FIG.5

FIG.3